# EUROPEAN PATENT APPLICATION

(11) **EP 4 786 102 A1**
(43) Date of publication of application: **05.08.2026**
(21) Application number: 25155434.1
(22) Date of filing: 31.01.2025
(51) Int. Cl.: B25B 7/12, B25J 1/04, B25B 9/00, E01H 1/12

(54) **GRIPPER CONTROL STRUCTURE**

(71) Applicant: ZhongShan QingYi Metal Products Enterprise Co., Ltd., ZhongShan City, Guangdong (CN)
(72) Inventor: Song, Weiye, ZhongShan City, Guangdong Province (CN); Wu, Kunguang, ZhongShan City, Guangdong Province (CN); Li, Shulong, ZhongShan City, Guangdong Province (CN); Yu, Tang Chieh, Taichung City (TW)
(74) Representative: Cabinet Chaillot

(57) **Abstract**

A gripper control structure has a jaw seat (1); two jaws (2), pivotally connected to the jaw seat (1) and each having a distal end pivotally connected to a connecting member (3); and an extension rod (6), having one end coupled to the jaw seat (1) and another end coupled to a control handle (5). A pulley mechanism (51) is provided inside the control handle (5). A linkage rod (4) is inserted through the extension rod (6) in the jaw seat (1) and connected to the connecting member (3). When a pushing block (52) of the control handle (5) is pressed by an external force to move linearly toward the inside of the control handle (5), the pulley mechanism (51) is pushed to drive the linking rod (4) to move so that the two jaws (2) are closed for gipping an object in an effortless manner.

## Description

### FIELD OF THE INVENTION

The present invention relates to a gripper, and more particularly, to a gripper control structure.

### BACKGROUND OF THE INVENTION

Many people have the habit of bending over to pick up items dropped on the ground. However, medical research has found that bending motion puts stress on the lumbar spine, without the assistance of leg muscles, it easily causes back injuries, leading to issues such as lower back pain, muscle strain, ligament sprains, and herniated discs.

In daily life, it is also possible to encounter situations where items are placed in locations that cannot be directly reached by hand, requiring the use of a chair or ladder for assistance, or seeking help from others to get them, which is quite inconvenient.

Taiwan Utility Model Publication No. M540226 discloses a selfie stick structure having a pick-up function. A claw portion is connected to a handle through a linking rod. An elastic member is provided in the middle section of the linking rod. By pressing the handle, the linking rod is pulled to compress the elastic member to shorten the distance, and the claw portion is moved inward and closed for gripping an object. However, pressing the handle to overcome the elastic restoring force of the elastic member requires a lot of force, long-term use is prone to hand muscle soreness, affecting the pressing force and resulting in poor gripping performance.

In view of this, how to solve the above problem is the primary issue to be solved by the present invention.

### SUMMARY OF THE INVENTION

The primary object of the present invention is to provide a gripper control structure. A pulley mechanism is provided in a control handle. The pulley mechanism includes a fixed pulley to change the direction of a pulling force and a movable pulley to reduce the pulling force required for pulling a linkage rod to move, thereby achieving the effect of gripping an object in an effortless manner.

In order to achieve the foregoing object, the present invention provides a gripper control structure. The gripper control structure has a jaw seat; two jaws, pivotally connected to the jaw seat and each having a distal end pivotally connected to a connecting member; and an extension rod, having one end coupled to the jaw seat and another end coupled to a control handle. A pulley mechanism is provided inside the control handle. A linkage rod is inserted through the extension rod in the jaw seat and connected to the connecting member. When a pushing block of the control handle is pressed by an external force to move linearly toward the inside of the control handle, the pulley mechanism is pushed to drive the linking rod to move so that the two jaws are closed for gipping an object in an effortless manner.

### BRIEF DESCRIPTION OF THE DRAWINGS

FIG. 1 is a perspective view of the present invention;
FIG. 2 is a partial exploded view of a gripping portion of the present invention;
FIG. 3 is a partial exploded view of a control handle of the present invention;
FIG. 4 is a schematic view of the present invention in an initial state, illustrating the combined structure of the cross section of the gripping portion and the longitudinal section of the control handle; and
FIG. 5 is a schematic view of the present invention in a use state, illustrating the combined structure of the cross section of the gripping portion and the longitudinal section of the control handle.

### DETAILED DESCRIPTION OF THE PREFERRED EMBODIMENTS

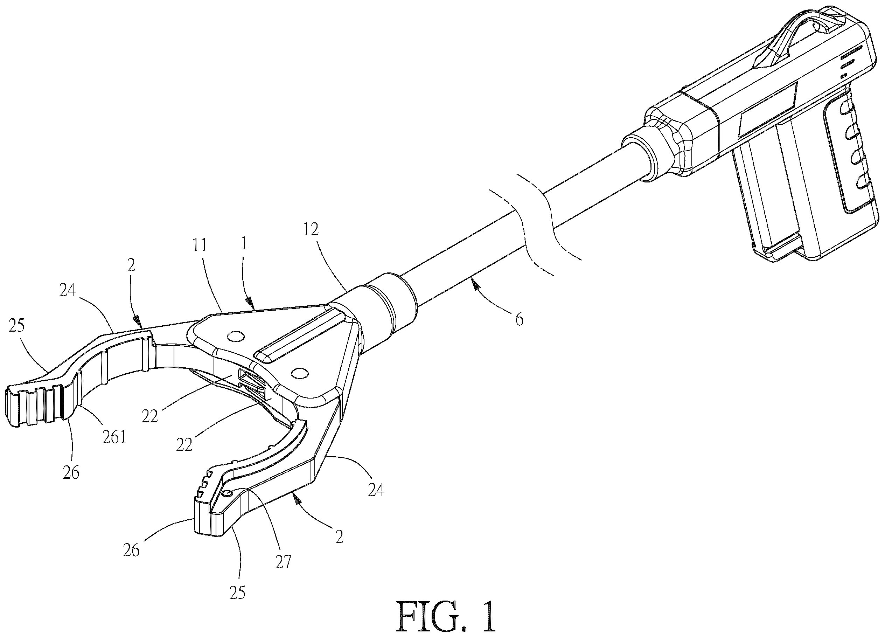

As shown in FIG. 1 through FIG. 3, the present invention discloses a gripper control structure, comprising a jaw seat 1, two jaws 2 pivotally connected to the jaw seat 1, a connecting member 3 pivotally connected to the two jaws 2, a control handle 5 driving the two jaws 2 through a linking rod 4, and an extension rod 6 connecting the jaw seat 1 and the control handle 5.

The jaw seat 1 has an accommodating section 11 and a coupling section 12. The accommodating section 11 is expanded outward and has an accommodating room 111 therein. The accommodating room 111 has an opening facing outward. The accommodating room 111 extends outward from the long sides of the opening to form two opposite platy portions 112. The two platy portions 112 each have two symmetrical pivot holes 113. The two jaws 2 each have a corresponding shaft hole 21. A rivet 7 passes through the shaft hole 21 and is pivotally connected between two opposite pivot holes 113, such that each jaw 2 is pivotally connected at the opening of the accommodating room 111 and is pivotal with the pivot point as the axis. The two jaws 2 each have a pivoting portion 22 at the distal end thereof. Specifically, the pivoting portion 22 is composed of two spaced pivot ears 221. The pivot ears 221 each have a slot 23. The pivot ears 221 of the two jaws 2 overlap and are pivotally connected to the connecting member 3 by a pivot shaft 8, such that the two jaws 2 can be driven to pivot synchronously.

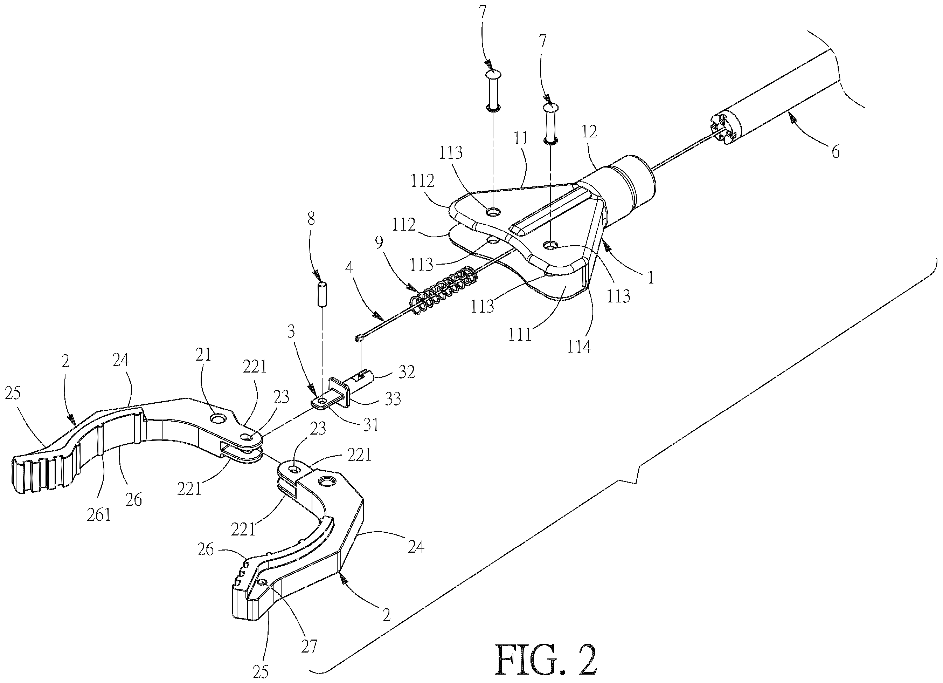

Further, as shown in FIG. 2, the connecting member 3 has a pivot end 31 and a connecting end 32. The pivot end 31 is pivotally connected to the pivot ears 221 of the two jaws 2. The connecting member 3 further has a blocking portion 33 formed between the pivot end 31 and the connecting end 32 and protruding radially. An elastic element 9 is fitted onto the connecting member 3 from the connecting end 32. One end of the elastic element 9 is against the bottom surface of the accommodating room 111, and the other end of the elastic element 9 is against the blocking portion 33 for assisting the two jaws 2 in returning to their original positions. In the present invention, the elastic element 9 is preferably a compression spring.

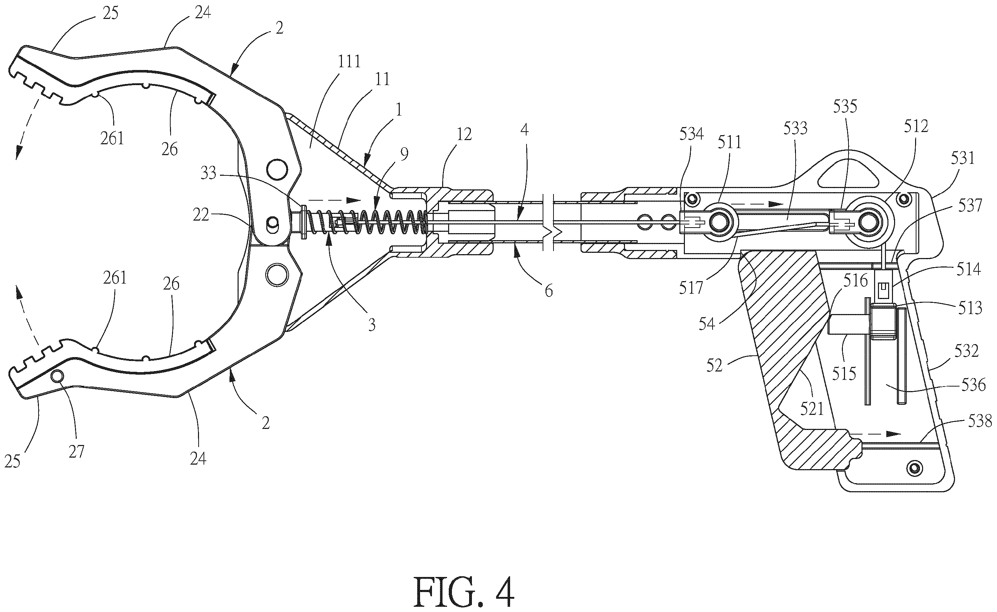

As shown in FIG. 2 and FIG. 4, the extension rod 6 is a hollow rod. One end of the extension rod 6 is coupled to the coupling section 12 of the jaw seat 1, and the other end of the extension rod 6 is coupled to the control handle 5. The control handle 5 is connected to a linkage rod 4 that is inserted through the extension rod 6 in the accommodating room 111 of the jaw seat 1 and connected to the connecting end 32 of the connecting member 3.

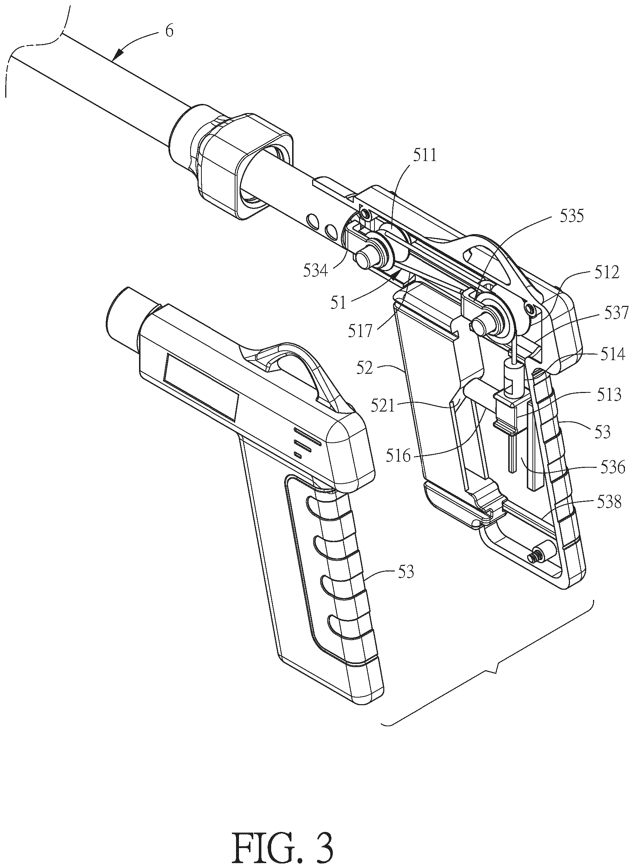

As shown in FIG. 3 through FIG. 5, in order to achieve the effects of easy gripping and labor-saving, the present invention utilizes the mechanical principle that a pulley saves labor and ingeniously provides a pulley mechanism 51 in the control handle 5 for driving the two jaws 2. Specifically, the control handle 5 is a hollow handle. The control handle 5 includes a pushing block 52 extending out of the control handle 5. The pushing block 52 has a pushing bevel 521. The pulley mechanism 51 is disposed inside the control handle 5 and connected to the distal end of the linkage rod 4. By pressing the pushing block 52 to generate a transverse, linear displacement toward the inside of the control handle 5, the pushing bevel 521 drives the pulley mechanism 51 to pull the linkage rod 4 to move toward the control handle 5, and the blocking portion 33 compresses the elastic element 9, so that the two jaws 2 are pivoted inward and closed for gripping an object. When the pushing block 52 is released, the elastic element 9 generates an elastic restoring force to open the two jaws 2.

Next, the specific structural relationship between the control handle 5 and the pulley mechanism 51 is further described below. Referring to FIG. 3 and FIG. 4, the control handle 5 is composed of two symmetrical housings 53 to form an internal space for accommodating the pulley mechanism 51 therein. The two housings 53 each have a coupling portion 531 extending transversely for coupling the extension rod 6 and a handle portion 532 extending downward from the bottom of the coupling portion 531 for the user to grasp thereon. The coupling portion 531 has a transverse groove 533 with two closed ends. A first pulley seat 534 is slidably disposed in the transverse groove 533. A second pulley seat 535 is fixedly disposed at one end of the coupling portion 531, close to the handle portion 532. The second pulley seat 535 is behind the first pulley seat 534. In this embodiment, the first pulley seat 534 and the second pulley seat 535 are both in a U-shape. The pulley mechanism 51 includes a movable pulley 511 pivotally mounted on the first pulley seat 534 and a fixed pulley 512 pivotally mounted on the second pulley seat 535. The front end of the first pulley seat 534 is connected to the distal end of the linking rod 4.

The handle portion 532 has a guide groove 536 below the second pulley seat 535. The pulley mechanism 51 further includes a traction slider 513 movable up and down along the guide groove 536. A traction rope 517 has an upper end connected to the second pulley seat 535 and a lower end connected to the traction slider 513. The traction rope 517 is sequentially wound around the movable pulley 511 and the fixed pulley 512 to form the pulley mechanism 51. Further, a connecting portion 514 is provided on top of the traction slider 513 for connecting the lower end of the traction rope 517. The traction slider 513 has a pressure-bearing portion 515 extending transversely from one side of traction slider 513 toward the pushing block 52. In this embodiment, an end portion of the pressure-bearing portion 515, facing the pushing block 52, has a force-receiving surface 516 inclined toward the pushing bevel 521 of the pushing block 52. The pushing bevel 521 and the force-receiving surface 516 are in contact with each other.

Further, the handle portion 532 has a first guide rail 537 above the guide groove 536 for the pushing block 52 to slide thereon and for preventing the traction slider 513 from sliding out of the guide groove 536. In this embodiment, preferably, one end of the handle portion 532, opposite to the coupling portion 531, has a second guide rail 538. The second guide rail 538 is parallel to the first guide rail 537 for the pushing block 52 to slide on the first guide rail 537 and the second guide rail 538. In particular, the bottom of the coupling portion 531 has a stepped portion 54 in front of the first guide rail 537, so as to prevent the pushing block 52 from slipping out.

As shown in FIG. 1 and FIG. 4, in the initial state, the blocking portion 33 of the connecting member 3 is pressed by the elastic element 9, so that the two jaws 2 are pivoted outward to be in an open state and are limited by two opposite short sides 114 of the jaw seat 1 to maintain a fixed opening width. At this time, the first pulley seat 534 is stopped by the front end of the transverse groove 533, and the connecting portion 514 of the traction slider 513 leans against the first guide rail 537, and the pushing block 52 is pushed by the pressure-bearing portion 515 of the traction slider 513 and extends out of the handle portion 532.

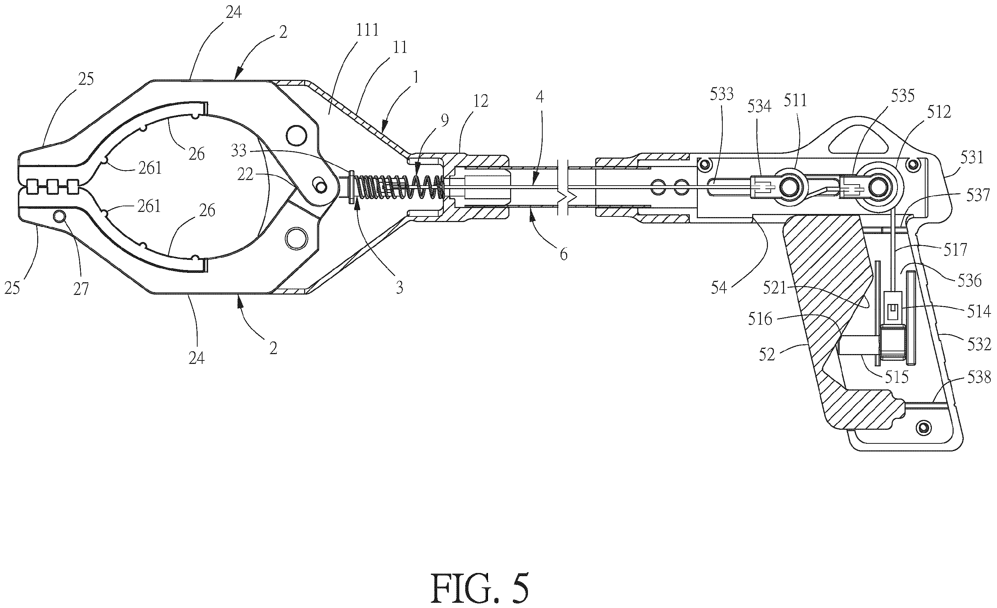

Referring to FIG. 5, in use, when the pushing block 52 is pressed by the user's finger, it is moved inward along the first guide rail 537 and the second guide rail 538, and the pushing bevel 521 pushes the force-receiving surface 516. Since the traction slider 513 is blocked by the first guide rail 537 and cannot slide upward along the guide groove, so the traction slider 513 is forced to slide downward along the guide groove 536, thereby generating a downward pulling force on the traction rope 517. The fixed pulley 512 changes the direction of the force, changing the downward pulling force into a lateral pulling force to pull the movable pulley 511, such that the first pulley seat 534 is moved toward the second pulley seat 535 together with the movable pulley 511, and then the linkage rod 4 is pulled to move for the blocking portion 33 to compress the elastic element 9, enabling the two jaws 2 to be pivoted outward and closed for gripping an object.

When the pushing block is released, the elastic element 9 generates an elastic restoring force to open the two jaws 2, and the linkage rod 4 is pulled to drive the first pulley seat 534 to move forward to the front end of the transverse groove 533, and the traction slider 513 is pulled by the traction rope 517 to slide upward, and the blocking block 52 is pushed by the force-receiving surface 516 to slide outward until it rests against the stepped portion 54, returning to the initial state for the next gripping operation.

Please refer to FIG. 1 and FIG. 2 again. To ensure the stability of the gripped object, the two jaws 2 each have a curved portion 24 with an opening facing inward and a straight head end to form a gripping portion 25. The curved portion 24 is configured for gripping a round or medium-sized object, but the size of the object cannot exceed the maximum distance between the two jaws. The gripping portion 25 is configured for gripping an irregular, small object or lightweight object such as clothing. The two jaws 2 each have an anti-slip pad 26 coupled on one side thereof having a curved opening. Preferably, the anti-slip pad 26 is made of a flexible material. The flexible material includes rubber, silicone, thermoplastic polyurethane elastomer (TPU), polyvinyl chloride (PVC), etc., but not limited thereto. The anti-slip pad 26 covers the curved portion 24 and the gripping portion 25. Anti-slip ribs 261 are formed on the surface of the anti-slip pad 26 for increasing the gripping friction, achieving a stable gripping effect.

In addition, a magnet 27 is provided in the gripping portion 25 of at least one of the two jaws 2 for attracting iron objects. In this embodiment, a cylindrical magnet is inserted into the gripping portion 25 of one of the jaws 2. In particular, the magnet 27 is preferably a strong magnet with sufficient magnetic attraction to quickly attract iron objects.

According to the above description, the gripper control structure provided by the present invention can achieve the following effects:

Firstly, labor-saving object gripping. This invention is based on the mechanical principle of using pulleys for labor-saving purposes. The fixed pulley is configured for changing the direction of force, and the movable pulley is configured for reducing the applied force. Through a clever design, the pulley mechanism drives the linkage rod to open or close the two jaws, achieving the effect of labor-saving object gripping and effectively addressing the issue of hand fatigue caused by prolonged gripping.

Secondly, stable structure and smooth gripping operation. This invention utilizes the first guide rail to block the traction slider, and the closed end of the transverse groove prevents the first pulley seat from excessive sliding and detachment. With the coordination of the above structures, it is ensured that, whether pressing or releasing the push block, the first pulley seat and the traction slider can move smoothly within the preset position without deviation, enhancing the structural stability of the pulley mechanism during operation and ensuring smooth gripping operation.

Thirdly, the gripper is capable of gripping various objects to meet daily needs. The two jaws of this invention have the curved portions for gripping round or larger and heavier objects and the straight gripping portions for gripping irregularly shaped objects and lightweight objects such as clothing. The magnet disposed in the gripping portion makes it easy to pick up small iron objects that have fallen on the ground, such as sewing needles, staples, etc., to meet daily needs.

## Claims

1. A gripper control structure, comprising:
a jaw seat (1), having an accommodating section (11) and a coupling section (12), the accommodating section (11) being expanded outward and having an accommodating room (111) therein, the accommodating room (111) having an opening facing outward;
two jaws (2), pivotally connected to the opening of the accommodating room (111) and each having a pivoting portion (22) at a distal end thereof, the pivoting portion (22) having a slot (23), the two jaws (2) each having a curved portion (24) with an opening facing inward and a gripping portion (25) at a head end thereof;
a connecting member (3), having a pivot end (31) and a connecting end (32), the pivot end (31) being pivotally connected to the pivoting portions (22) of the two jaws (2), an elastic element (9) being fitted onto the connecting member (3) from the connecting end (32);
an extension rod (6), being a hollow rod and having one end coupled to the coupling section (12) of the jaw seat (1) and another end coupled to a control handle (5), the control handle (5) being connected to a linkage rod (4) that is inserted through the extension rod (6) in the accommodating room (111) of the jaw seat (1) and connected to the connecting end (32) of the connecting member (3), wherein when the control handle (5) is pressed to pull the linkage rod (4) to compress the elastic element (9), the two jaws (2) are closed for gripping an object; wherein when the control handle (5) is released, the elastic element (9) generates an elastic restoring force to open the two jaws (2);
wherein the control handle (5) is a hollow handle, the control handle (5) includes a pushing block (52) extending out of the control handle (5), a pulley mechanism (51) is provided inside the control handle (5), the pulley mechanism (51) includes a movable pulley (511), a fixed pulley (512) and a traction rope (517) wound around the movable pulley (511) and the fixed pulley (512), the traction rope (517) has a lower end connected to a traction slider (513), the traction slider (513) is located opposite the pushing block (52), the pushing block (52) has a pushing bevel (521), when the pushing block (52) is pressed by an external force to move transversely, linearly toward an inside of the control handle (5), the pushing bevel (521) pushes the traction slider (513) to move longitudinally, and the movable pulley (511) is driven to pull the linking rod (4) to move toward the control handle (5), so that the two jaws (2) are pivoted inward and closed for gipping the object.

2. The gripper control structure as claimed in claim 1, wherein the control handle (5) is composed of two symmetrical housings (53) connected to each other, the two housings (53) each have a coupling portion (531) extending transversely and a handle portion (532) connected to a bottom of the coupling portion (531), the coupling portion (531) has a front end coupled to the another end of the extension rod (6); the coupling portion (531) has a transverse groove (533) therein, a first pulley seat (534) is slidably disposed in the transverse groove (533), the movable pulley (511) is pivotally mounted on the first pulley seat (534), a second pulley seat (535) is fixedly disposed at one end of the coupling portion (531), close to the handle portion (532), the second pulley seat (535) is behind the first pulley seat (534), the fixed pulley (512) is pivotally mounted on the second pulley seat (535), the handle portion (532) has a guide groove (536) below the second pulley seat (535), the traction slider (513) is movable up and down along the guide groove (536), the handle portion (532) has a first guide rail (537) above the guide groove (536) for the pushing block (52) to slide thereon, the traction rope (517) has an upper end connected to the second pulley seat (535) and the lower end connected to the traction slider (513), the traction rope (517) is sequentially wound around the movable pulley (511) and the fixed pulley (512) to form the pulley mechanism (51), a front end of the first pulley seat (534) is connected to a distal end of the linking rod (4), when the pushing block (52) pushes the traction slider (513) to move downward, the movable pulley (511) is pulled to move toward the fixed pulley (512), and the linkage rod (4) is driven to move for closing the two claws (2).

3. The gripper control structure as claimed in claim 2, wherein the transverse groove (533) has two closed ends for preventing the first pulley seat (534) from slipping out.

4. The gripper control structure as claimed in claim 2, wherein a connecting portion (514) is provided on top of the traction slider (513) for connecting the lower end of the traction rope (517), and the connecting portion (514) is blocked by the first slide rail (537).

5. The gripper control structure as claimed in claim 2, wherein the traction slider (513) has a pressure-bearing portion (515) extending toward the pushing block (52), an end portion of the pressure-bearing portion (515), facing the pushing block (52), has a force-receiving surface (516) inclined toward the pushing block (521), and the force-receiving surface (516) is in contact with the pushing bevel (521).

6. The gripper control structure as claimed in claim 2, wherein one end of the handle portion (532), opposite to the coupling portion (531), has a second guide rail (538) for the pushing block (52) to slide thereon, and the second guide rail (538) is parallel to the first guide rail (537).

7. The gripper control structure as claimed in claim 1, wherein the connecting member (3) further has a blocking portion (33) formed between the pivot end (31) and the connecting end (32) and protruding radially, one end of the elastic element (9) is against the blocking portion (33), another end of the elastic element (9) is against a bottom surface of the accommodating room (111), when the linkage rod (4) is pulled for closing the two jaws (2), the blocking portion (33) compresses the elastic element (9) to generate the elastic restoring force; when the force pulling the linkage rod (4) disappears, the elastic restoring force of the elastic element (9) pushes the two jaws (2) outward to be in an open state.

8. The gripper control structure as claimed in claim 1, wherein the pivoting portion (22) is composed of two spaced pivot ears (221), the pivot ears (221) each have the slot (23), the pivot ears (221) of the pivoting portions (22) of the two jaws (2) overlap and are pivotally connected to the pivot end (31) of the connecting member (3).

9. The gripper control structure as claimed in claim 1, wherein the two jaws (2) each have an anti-slip pad (26) coupled on one side thereof having a curved opening, and a plurality of anti-slip ribs (261) are formed on a surface of the anti-slip pad (26).

10. The gripper control structure as claimed in claim 1, wherein a magnet (27) is provided in the gripping portion (25) of at least one of the two jaws (2).
